(19) Europäisches Patentamt European Patent Office Office européen des brevets

(11) **EP 2 719 055 B1**

(12) **EUROPEAN PATENT SPECIFICATION**

(45) Date of publication and mention
of the grant of the patent:
**17.08.2016  Bulletin 2016/33**

(51) Int Cl.:
***B60L 11/18*** *(2006.01)*        ***H02J 7/14*** *(2006.01)*

(21) Application number: **12796834.5**

(22) Date of filing: **31.05.2012**

(86) International application number:
**PCT/SE2012/050580**

(87) International publication number:
**WO 2012/169953 (13.12.2012 Gazette 2012/50)**

(54) **BATTERY CHARGING SYSTEM**

BATTERIEAUFLADESYSTEM

SYSTÈME DE CHARGE DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2011  SE 1100442
07.06.2011  SE 1100443
13.09.2011  SE 1150825**

(43) Date of publication of application:
**16.04.2014  Bulletin 2014/16**

(73) Proprietor: **Scania CV AB
151 87 Södertälje (SE)**

(72) Inventors:
• **SKARPED, Michael
S-151 44 Södertälje (SE)**
• **BLOMMEGÅRD, Per
S-153 30 Järna (SE)**
• **KJELLDAL, Therese
S-151 44 Södertälje (SE)**

(74) Representative: **Scania CV AB
Patents, GP 117kv
151 87 Södertälje (SE)**

(56) References cited:
**EP-A2- 0 299 807        WO-A1-2005/060066
CN-A- 101 917 049        US-A- 3 129 378
US-A- 4 542 462          US-A1- 2010 127 668
US-B1- 6 353 306         US-B1- 6 404 163
US-B1- 6 404 163**

**Description**

Field of the invention

The present invention relates to a battery charging system for a vehicle, a method for controlling the charging of at least one battery in said battery charging system, and a computer programme product, according to the preambles of the independent claims.

Background to the invention

The invention is particularly applicable to long vehicles, e.g. buses. It is usual for the engine to be situated in the rear portion of a bus, and the batteries in the forward portion, in order to optimise the vehicle's weight distribution. These separate locations mean that long cables have to be run between the power source and the batteries. The resistance in these long cables, in conjunction with large energy-consuming units in the bus, e.g. fans and air conditioning units, causes voltage drops across cables and earth plane. The loads may be connected at different points in the earth plane. When large loads occur, e.g. when the air conditioning is switched on, voltage drops of up to one or several volts may occur between the electricity generators and batteries of the bus. This means that the charging voltage of the battery system becomes lower than desired, leading to the batteries not being charged as effectively as they might be. The low battery charging voltage level also results in shortening of the service life of the batteries.

The energy-consuming units may be connected at various points in the charging circuit which comprises a power source and batteries. The circuit is also often configured in different ways in different buses, since these units are connected in the circuit at whatever point is most appropriate, e.g. in terms of space requirements. Depending on how they are connected and how the earth plane is configured in a specific case the resistance due to one or more energy-consuming units in the circuit will vary. The voltage drop which occurs will therefore vary depending on which units are connected and the configuration of the circuit in the specific case, e.g. in a particular vehicle.

A problem in this respect is that calculating the resistance in the circuit, and the consequent voltage drop, between the power source and the batteries is a time-consuming operation. Preliminary measurement of the circuit and adjustment of the voltage on the basis of the measured value is very time-consuming, since the resistance in the circuit varies from vehicle to vehicle depending on the configuration of the circuit and on which units are connected at the time.

There are currently known systems which are suited to buses and trucks and have an adaptive battery charging function which uses an estimated battery temperature to decide how high a voltage to demand from the electric power source during charging. This function does however depend on temperature sensors. This known adaptive battery charging function does not cater for the consequences which arise from varying resistances in the circuit or from separate locations for batteries and the electric power source in the vehicle.

The present inventors have thus identified a need for an adaptive battery charging function which caters for and adapts to resistances in the charging circuit which vary between different buses, without having to undertake preliminary measurement of the resistance of the circuit for different situations.

The following published patents and patent applications describe various solutions within this field.

US2009051325 describes a regulating system for charging a battery in a vehicle whereby output voltage from the power source is corrected on the basis of desired charging voltage in conjunction with an offset voltage which depends on actual current delivered to the battery. The system comprises temperature sensors for monitoring the temperature in the power source. Where the cables are of fixed length, the system can also be calibrated with respect to their resistance.

JP2307338 describes a system for voltage drop compensation by calculating expected voltage drop due to cable length and then measuring current and voltage, followed by correcting the voltage from the generator.

WO2005060066 describes a charging device for charging a plurality of batteries connected in series in a vehicle. The device is connected to a generator with built-in charging regulator via a first line and to the generator output via a second line. The first line is used for feedback to the charging regulator so that desired output voltage is obtained from the generator.

US6404163 describes a method for control of charging voltage to a battery in a vehicle, and a charging system comprising the technical features according to the preamble of Claim 1.

An optimum charging voltage for the battery is calculated and serves as input to a generator to ensure that it delivers correct charging voltage to the battery.

US5182510 describes a system for charging a battery with a generator, using a rectifier regulator. The regulated voltage compensates for voltage drop which occurs in the cable between the rectifier and the battery.

US2008100269 describes a regulating system for a generator in a vehicle whereby the output voltage from the generator and the battery voltage are measured and are compared with a target value to decide whether there are malfunctions in the circuit.

US2010127668 describes a method for compensating for voltage drop which occurs in the cable between battery and charger. The method comprises initially calculating the voltage drop in the cable and then using the saved value to correct the charging voltage.

WO9210019 describes a voltage regulator for a generator which charges a battery in a vehicle. The voltage drop between the battery and the generator is compensated for by calculating the voltage drop on the basis of the generator current and the cable resistance.

An object of the present invention is to keep the charging voltage at an optimum level by compensating for the voltage drop which occurs on the way from the electric power source to the batteries.

A further object is to propose an adaptive battery charging function which does not depend on further sensors.

Another object is to propose an adaptive battery charging function which is independent of the exact resistance in the circuit, which resistance varies depending on the magnitude and use of the loads and their connection relative to the charging circuit, resulting in no need for calibration of the circuit.

A further object is to keep the battery voltage at a level calculated to be optimum according to the aforesaid known adaptive battery charging system currently often used in buses.

## Summary of the invention

The above objects are achieved with the invention defined by the independent claims.

Preferred embodiments are defined by the dependent claims.

The present invention relates to a battery charging system which regulates the battery voltage level on the basis of voltage drop at the time.

An advantage of the invention is that the charging voltage drop need not be decreased by reducing the charging circuit resistance by means of larger and/or more electrical conductors, which would be expensive, add weight and adversely affect the environment.

As the present invention pertains to a battery charging system with feedback, no cabling changes are needed to achieve desired battery charging voltage. The feedback compensates for the voltage drop, so there is no need to run more powerful cables to reduce the voltage drop in the circuit and no need to connect energy consumers at other points in the circuit in order to prevent voltage drops.

According to an embodiment, the battery charging system comprises an electric power source adapted to delivering a charging voltage to at least one battery with one or more resistance-causing units $R_1$-$R_{11}$ and $R_{L1}$-$R_{L3}$ connected to the system. The resistance-causing units comprise conductors between the power source, the batteries and the energy-consuming units, with a line resistance $R_1$-$R_{11}$, and the energy-consuming units which have a resistance $R_{L1}$-$R_{L3}$. The conductors may for example be cabling and/or frame structure. The energy-consuming units may for example comprise air conditioning, extra heater, ventilation, 230V AC converter, but comprise also all other systems on board the vehicle which consume energy. The system further comprises a regulator adapted to continuously receiving a value which represents a charging voltage $V_d$ desired at the time and a value which represents a battery voltage $V_{bat}$ at the time for the battery system, and to using these values as a basis for continuously calculating a charging voltage $V_{calc}$ delivered from the electric power source and required to achieve said desired charging voltage $V_d$, which regulator is adapted to generating a control signal S which contains the control command to the electric power source to deliver the calculated charging voltage $V_{calc}$.

According to another aspect of the invention, the present invention relates to a method for controlling the charging of at least one battery in said battery charging system.

An advantage of the method for controlling the charging of at least one battery in a battery charging system such as according to the invention is that it can be implemented as software in an existing control unit of the vehicle.

According to an embodiment of the invention, the regulator is a PID regulator.

According to a further aspect of the present invention, the invention relates also to a computer programme product comprising programme steps for applying the method.

## Brief description of drawings

Figure 1 depicts a battery charging system for a vehicle according to the present invention.

Figure 2 is a schematic view of the battery charging system according to an embodiment of the invention, with a number of resistance-causing units connected.

Figure 3 shows schematically how the electric power source in the system is controlled according to an embodiment.

Figure 4 illustrates the behaviour of the battery charging system according to an embodiment of the invention.

Detailed description of preferred embodiments of the invention

The invention will now be described in detail with reference to the attached drawings.

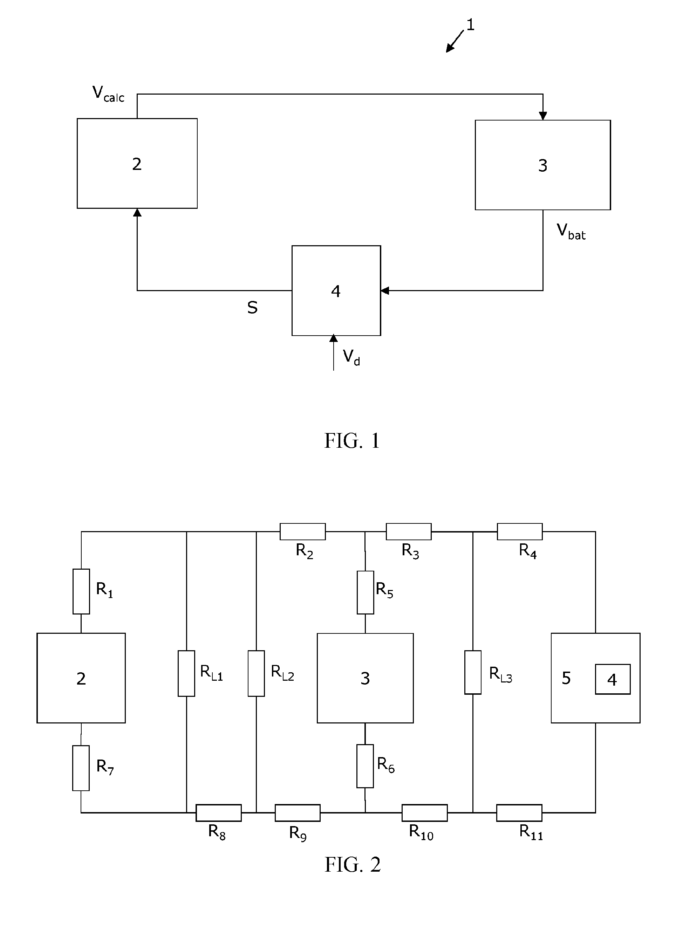

Figure 1 depicts a battery charging system 1 according to the present invention. The system 1 comprises an electric power source 2 adapted to delivering a charging voltage to at least one battery 3 with one or more resistance-causing units connected to the system. The system further comprises a regulator 4 adapted to continuously receiving a value which represents a charging voltage $V_d$ desired at the time and a value which represents a battery voltage $V_{bat}$ at the time for said at least one battery 3, and to using these values as a basis for continuously calculating a charging voltage $V_{calc}$ delivered from the electric power source 2 and required to achieve said desired charging voltage $V_d$, which regulator 4 is adapted to generating a control signal S which contains the control command to the electric power source 2 to deliver the calculated charging voltage $V_{calc}$.

Figure 2 is a schematic view of the battery charging system 1 with a number of resistance-causing units $R_1$-$R_{11}$, $R_{L1}$-$R_{L3}$ which are connected between the electric power source 2, said at least one battery 3 and the regulator 4 and which in various ways cause resistance. Resistance-causing units in the form of conductors are here called $R_1$-$R_{11}$. The conductors may be lines and/or the vehicle's earth plane (also called chassis earth). Depending on the particular configuration, the resistances of the conductors may of course be more or fewer than eleven in number and the respective resistance R of each conductor may vary depending on its resistivity, length and cross-sectional area. The resistance-causing units comprise not only the conductor resistance R but in this case also three connected current-consuming units $R_{L1}$-$R_{L3}$, e.g. air conditioning units. The number of current-consuming units $R_L$ connected may of course vary depending on the particular configuration. The more energy they consume, the greater the currents which pass through the resistance-causing units $R_1$ and the greater the consequent voltage drop.

In Figure 2, the regulator 4 is situated in a control unit 5. According to an embodiment, the value which represents the battery voltage $V_{bat}$ at the time is calculated. The voltage of the control unit 5 then serves as a value representing the battery voltage $V_{bat}$ at the time for the at least one battery 3. An alternative way of arriving at the battery voltage $V_{bat}$ at the time is to measure it directly on the poles of the at least one battery, but this requires extra cabling and a consequently more expensive system.

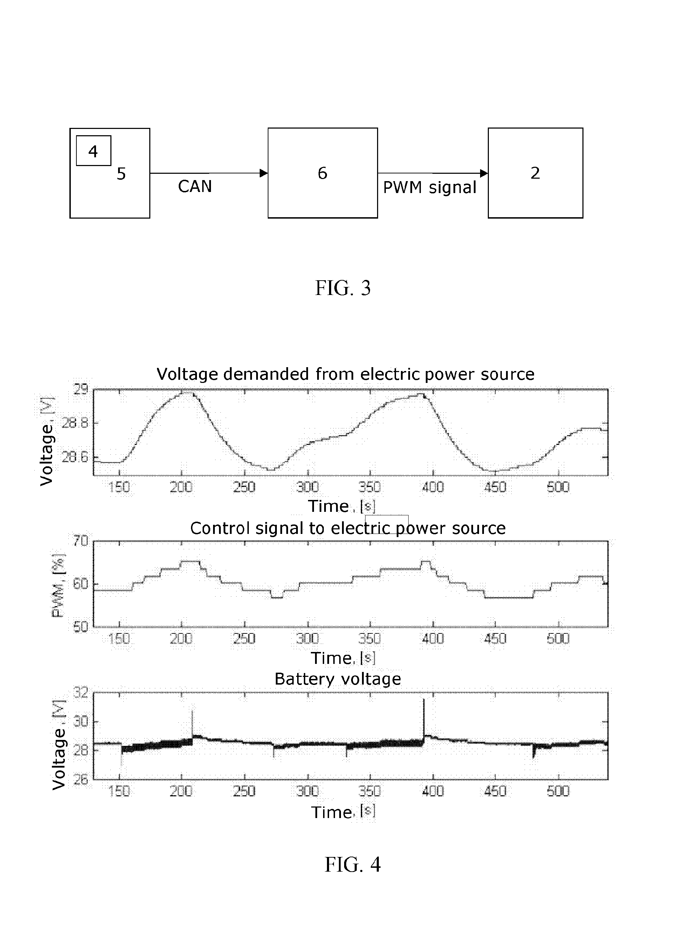

Figure 3 shows schematically how the electric power source 2 in the system is controlled according to an embodiment. The charging voltage for the electric power source is calculated in the control unit 5 and converted to a percentage value. The percentage value is sent to an engine control unit 6 in which a pulsewidth-modulated (PWM) signal is created on the basis of the value received.

The signal passes between the control unit 5 and the engine control unit 6 via the vehicle's communication network (CAN). The PWM signal is sent to the electric power source 2, which then produces the charging voltage.

According to an embodiment, the regulator 4 is a PID regulator, but other kinds of suitable regulator may also be used. The PID regulator is controlled by a number of predetermined fixed parameters related to the vehicle, i.e. the fixed parameters are determined beforehand so that the PID regulator, using these parameters, can be employed generally, e.g. for a bus, without the parameters having to be adjusted with respect to connected units in a specific bus. The PID regulator comprises three parameters, viz. a proportional element, an integral element and a derivative element. The PID regulator is so adapted as to achieve for a certain type of vehicle an optimum balance between its three elements in order to bring about its desired behaviour. There are various systematic ways of iteratively finely adjusting the parameters to achieve the desired result. The internal model control (IMC) method is an applicable way of adjusting and identifying the parameters for the regulator. The PID regulator may be implemented in series or be connected in parallel. An advantage of parallel connection is that the P, I and D elements can be implemented individually and then summated. This makes it easier to test different values for the various parameters without affecting other parameters of the regulator than that which is relevant at the time.

The regulator may be described by the formula

$$F(s) = K\left(1 + \frac{1}{T_i s} + \frac{T_d s}{\mu T_d s + 1}\right)$$

in which K is the proportional element, $K/T_i$ the integral element, $T_d s/(\mu T_d s + 1)$ the derivative element, and $\mu$ is a constant which is discussed below.

The parameters for the PID regulator are chosen by examining a step response of the system. From the step response it is possible to construct a three-parameter model which describes the system. The parameters for the PID regulator may thus be determined systematically by means of a three-parameter model of the form

$$G(s) = \frac{K_p}{1+sT} e^{-sL}$$

The values for the parameters are read off in the step response for the system without feedback Therein according to an example,

L = 0.15 s denotes delay from a step in the input signal to a reaction in the output signal.

Kp= 27.95 V denotes the final value to be reached for the step response.

T = 0.22 s denotes a time constant for the system which is calculated as the time from L to the time when the system reaches 0.63% of its final value.

The parameters from the step response result in the three-parameter model

$$G(s) = \frac{27.95}{1 + 0.22s} e^{-0.15s}$$

The parameters for the PID regulator are calculated from the three-parameter model by applying the IMC method. The IMC method uses only new information in the measured signal as feedback signal. The IMC method chooses the parameters as described below, in which $T_c$ is the only design parameter and the other three are taken from the three-parameter model. $T_c$ is the desired time constant for the system with feedback and T the desired time constant for the system without feedback. $\dfrac{L}{L+T}$ is the relative time delay for the system

$$K = \frac{L}{K_p(T_c+L)} \cdot \left(\frac{1}{\frac{L}{L+T}} - \frac{1}{2}\right) = \frac{0.15}{27.95(0.22+0.15)} \left(\frac{1}{\frac{0.15}{0.15+0.22}} - \frac{1}{2}\right) = 0.0352$$

$$T_i = L\left(\frac{1}{\frac{L}{L+T}} - \frac{1}{2}\right) = 0.15 \left(\frac{1}{\frac{0.15}{0.15+0.22}} - \frac{1}{2}\right) = 0.2950$$

$$T_d = L \frac{1-\frac{L}{L+T}}{2-\frac{L}{L+T}} = 0.15 \cdot \frac{1-\frac{0.15}{0.15+0.22}}{2-\frac{0.15}{0.15+0.22}} = 0.0559$$

The result with the calculated values for the PID regulator in parallel form is the regulator

$$F(s) = 0.0352 \cdot \left(1 + \frac{1}{0.2950s} + \frac{0.0559s}{\mu \cdot 0.0559s + 1}\right)$$

Implementing the regulator 4 involves making certain adjustments, the value $\mu$ is chosen as 0.2 but is an adjustable parameter. To implement the regulator, a digital implementation is used.

As the resistance in the system 1 varies over time, due to varying connected current consumers $R_L$ and also variation in the desired charging voltage, sampling relatively often is of advantage, so the sampling rate for the battery charging system is between 1.4 and 3.4 Hz and preferably about 2 Hz, but other sampling rates may be relevant depending on the system's configuration.

The connected resistance-causing units $R_1$-$R_{11}$, $R_{L1}$-$R_{L3}$ take the form of resistances in lines $R_1$-$R_{11}$ and/or

connected current consumers $R_{L1}$-$R_{L3}$, e.g. air conditioning or fans. These resistance-causing units vary over time.

Figure 4 comprises three diagrams of how the battery charging system behaves. The top diagram shows a voltage demanded from the electric power source, the middle diagram a control signal to the electric power source, e.g. the pulsewidth-modulated (PWM) signal, and the bottom diagram the charging voltage. The positive peaks occur in the battery voltage level when a large load is disconnected from the system. Where the negative peaks occur in the diagram, the large load has been connected. The system compensates for voltage drops by demanding a higher voltage from the electric power source, which results in the battery voltage rising. An example of this may be seen in the diagram from time 150 s to about 200 s.

The battery system 3 is preferably suited to being used in a bus which has the electric power source 2 situated in its rear portion and at least one battery 3 in its forward portion.

The present invention relates also to a method for controlling the charging of at least one battery in a battery charging system for a vehicle, which system comprises an electric power source 2 adapted to delivering a charging voltage to at least one battery 3 with one or more resistance-causing units $R_1$-$R_{11}$, $R_{L1}$-$R_{L3}$ connected to the system. The method comprises the steps of

- continuously receiving a value which represents a charging voltage $V_d$ desired at the time in a regulator 4,
- continuously receiving a value which represents a battery voltage $V_{bat}$ at the time for the at least one battery 3 in said regulator 4,
- continuously calculating a charging voltage $V_{calc}$ delivered from the electric power source 2 and required to achieve said desired charging voltage $V_d$ on the basis of a charging voltage $V_d$ desired at the time and a battery voltage $V_{bat}$ at the time for the battery system 3, and
- generating a control signal S which contains the control command to the electric power source 2 to deliver the calculated charging voltage $V_{calc}$.

According to an embodiment of the method, the regulator 4 is a PID regulator.

According to an embodiment of the method, the regulator 4 is controlled by a number of predetermined fixed parameters related to the vehicle.

According to a further embodiment of the method, the value which represents the battery voltage $V_{bat}$ at the time for the at least one battery 3 is calculated.

According to an embodiment of the method, the sampling rate for the battery charging system 1 is about 2 Hz.

The present invention relates also to a computer programme product comprising programme steps for applying the above method.

The present invention is not restricted to the preferred embodiments described above. Sundry alternatives, modifications and equivalents may be used. The embodiments described above are therefore not to be regarded as limiting the invention's protective scope which is defined by the attached claims.

## Claims

1.  A battery charging system (1) in a bus, comprising
    an electric power source (2) adapted to delivering a charging voltage to at least one battery (3) with one or more resistance-causing units ($R_1$-$R_{11}$, $R_{L1}$-$R_{L3}$) connected to the system (1), and
    a regulator (4) adapted to continuously receiving a value which represents a charging voltage ($V_d$) desired at the time and a value which represents a battery voltage ($V_{bat}$) at the time for the at least one battery (3), and to using these values as a basis for continuously calculating a charging voltage ($V_{calc}$) delivered from the electric power source (2) and required for achieving said desired charging voltage ($V_d$), which regulator (4) is adapted to generating a control signal (S) which contains the control command to the electric power source (2) to deliver the calculated charging voltage ($V_{calc}$), and is situated in a control unit (5), **characterised in that** the value which represents the battery voltage ($V_{bat}$) at the time for the at least one battery (3) is calculated on the basis of the voltage of the control unit (5).

2.  A battery charging system according to claim 1, in which the regulator (4) is a PID regulator.

3.  A battery charging system according to either of claims 1 and 2, in which the regulator (4) is controlled by a number of predetermined fixed parameters related to the bus.

4.  A battery charging system according to any one of claims 1-3, in which the sampling period for the battery charging system (1) is about 2 Hz.

**5.** A battery charging system according to any one of claims 1-4, in which the connected resistance-causing units ($R_1$-$R_{11}$, $R_{L1}$-$R_{L3}$) take the form of resistances in conductors ($R_1$-$R_{11}$) and/or connected current consumers ($R_{L1}$-$R_{L3}$).

**6.** A battery charging system according to claim 5, in which the number of connected current consumers ($R_{L1}$-$R_{L3}$) varies over time.

**7.** A battery charging system according to any one of claims 1-6, in which the electric power source (2) is situated in the rear portion of the bus and the at least one battery (3) in the forward portion of the bus, or vice versa.

**8.** A method for controlling the charging of at least one battery in a battery charging system (1) of a bus, which system comprises an electric power source (2) adapted to delivering a charging voltage to at least one battery (3) with one or more resistance-causing units ($R_1$-$R_{11}$, $R_{L1}$-$R_{L3}$) connected to the system, which method comprises the steps of

- continuously receiving a value which represents a charging voltage ($V_d$) desired at the time in a regulator (4) situated in a control unit (5),
- continuously receiving a value which represents a battery voltage ($V_{bat}$) at the time for the at least one battery (3) in said regulator (4),
- continuously calculating a charging voltage ($V_{calc}$) delivered from the electric power source (2) and required to achieve said desired charging voltage ($V_d$) on the basis of a charging voltage ($V_d$) desired at the time and a battery voltage ($V_{bat}$) at the time for at least one battery (3), and
- generating a control signal (S) which contains the control command to the electric power source (2) to deliver the calculated charging voltage ($V_{calc}$), the method being **characterized in that** the value which represents the battery voltage ($V_{bat}$) at the time for the battery system is calculated on the basis of the voltage of the control unit (5).

**9.** A method according to claim 8, in which the regulator (4) is a PID regulator.

**10.** A method according to claim 8, in which the regulator (4) is controlled by a number of predetermined fixed parameters related to the bus.

**11.** A method in a battery charging system according to any one of claims 8-10, in which the sampling period for the battery charging system (1) is about 2 Hz.

**12.** A computer programme comprising programme steps for applying the method according to any one of claims 8-11.

**Patentansprüche**

**1.** Batterieladesystem (1) in einem Bus, umfassend
eine elektrische Energiequelle (2), ausgebildet zum Bereitstellen einer Ladespannung zu wenigstens einer Batterie (3) mit einer oder mehreren mit dem System (1) verbundenen widerstandsverursachenden Einheiten ($R_1$-$R_{11}$, $R_{L1}$-$R_{L3}$), und
einen Regler (4), ausgebildet zum kontinuierlichen Erhalten eines Werts, der eine Soll-Ladespannung ($V_d$) zu der Zeit darstellt, und eines Werts, der eine Batteriespannung ($V_{bat}$) zu der Zeit für die wenigstens eine Batterie (3) darstellt, und zum Verwenden der Werte als eine Grundlage zum kontinuierlichen Berechnen einer von der elektrischen Energiequelle gelieferten Ladespannung ($V_{calc}$), die benötigt wird zum Erreichen der Soll-Ladespannung ($V_d$), wobei der Regler (4) ausgebildet ist zum Erzeugen eines Steuersignals (S), welches den Steuerbefehl für die elektrische Energiequelle (2) umfasst, um die berechnete Ladespannung ($V_{calc}$) zu liefern, und der in einer Steuereinheit (5) befindlich ist,
**dadurch gekennzeichnet,**
**dass** der Wert, der die Batteriespannung ($V_{bat}$) zu der Zeit für die wenigstens eine Batterie (3) darstellt, auf der Grundlage der Spannung der Steuereinheit (5) berechnet wird.

**2.** Batterieladesystem nach Anspruch 1, wobei der Regler (4) ein PID-Regler ist.

**3.** Batterieladesystem nach einem der Ansprüche 1 oder 2, wobei der Regler (4) durch eine Anzahl an vorbestimmten festgelegten mit dem Bus in Zusammenhang stehenden Parametern gesteuert wird.

**4.** Batterieladesystem nach einem der Ansprüche 1-3, wobei die Abtastdauer für das Batterieladesystem (1) um 2 Hz liegt.

**5.** Batterieladesystem nach einem der Ansprüche 1-4, wobei die verbundenen widerstandsverursachenden Einheiten ($R_1$-$R_{11}$, $R_{L1}$-$R_{L3}$) die Form von Widerständen in Stromleitern ($R_1$-$R_{11}$) und/oder verbundenen Stromverbrauchern ($R_{L1}$-$R_{L3}$) annehmen.

**6.** Batterieladesystem nach Anspruch 5, wobei die Anzahl von verbundenen Stromverbrauchern ($R_{L1}$-$RL_{3)}$ über die Zeit variiert.

**7.** Batterieladesystem nach einen der Ansprüche 1-6, wobei die elektrische Energiequelle (2) in dem hinteren Teil des Busses angeordnet ist und die wenigstens eine Batterie (3) in dem vorderen Teil des Busses angeordnet ist, oder umgekehrt.

**8.** Verfahren zum Steuern des Ladens wenigstens einer Batterie in einem Batterieladesystem (1) eines Busses, wobei das System eine elektrische Energiequelle (2) umfasst, die ausgebildet ist zum Bereitstellen einer Ladespannung zu der wenigstens einen Batterie (3) mit einer oder mehrerer widerstandsverursachender mit dem System verbundener Einheiten ($R_1$-$R_{11}$-$R_{L1}$-$R_{L3}$), wobei das Verfahren die Schritte umfasst

- kontinuierliches Erhalten eines Werts, der eine Soll-Ladespannung ($V_d$) zu der Zeit in einem in einer Steuereinheit (5) befindlichen Regler (4) darstellt,
- kontinuierliches Erhalten eines Werts, der eine Batteriespannung ($V_{bat}$) zu der Zeit für die wenigstens eine Batterie (3) in dem Regler (4) darstellt,
- kontinuierliches Berechnen einer von der elektrischen Energiequelle (2) bereitgestellten Ladespannung ($V_{calc}$), die benötigt wird zum Erreichen der Soll-Ladespannung ($V_d$), auf der Grundlage einer Soll-Ladespannung ($V_d$) zu der Zeit und einer Batteriespannung ($V_{bat}$) zu der Zeit für wenigstens eine Batterie (3), und
- Erzeugen eines Steuersignals (S), welches den Steuerbefehl für die elektrische Energiequelle (2) zum Bereitstellen der berechneten Ladespannung ($V_{calc}$) umfasst, wobei das Verfahren **dadurch gekennzeichnet ist, dass** der Wert, der die Batteriespannung ($V_{bat}$) zu der Zeit für das Batteriesystem darstellt, auf der Grundlage der Spannung der Steuereinheit (5) berechnet wird.

**9.** Verfahren nach Anspruch 8, wobei der Regler (4) ein PID-Regler ist.

**10.** Verfahren nach Anspruch 8, wobei der Regler (4) durch eine Anzahl an vorbestimmten festgelegten mit dem Bus in Zusammenhang stehenden Parametern gesteuert wird.

**11.** Verfahren in einem Batterieladesystem nach einem der Ansprüche 8-10, wobei die Abtastdauer für das Batterieladesystem (1) etwa 2 Hz beträgt.

**12.** Computerprogramm, umfassend Programmschritte zum Anwenden des Verfahrens nach einem der Ansprüche 8-11.


**Revendications**

**1.** Système de charge de batterie (1) dans un bus, comprenant :

une source d'alimentation électrique (2) adaptée pour délivrer une tension de charge à au moins une batterie (3) avec une ou plusieurs unités créant une résistance ($R_1$-$R_{11}$, $R_{L1}$-$R_{L3}$) connectées au système (1), et un régulateur (4) adapté pour recevoir en continu une valeur qui représente une tension de charge ($V_d$) souhaitée sur le moment et une valeur qui représente une tension de batterie ($V_{bat}$) sur le moment pour l'au moins une batterie (3), et pour utiliser ces valeurs comme base pour le calcul continu d'une tension de charge ($V_{calc}$) délivrée par la source d'alimentation électrique (2) et requise pour obtenir ladite tension de charge souhaitée ($V_d$), lequel régulateur (4) est adapté pour générer un signal de commande (S) qui contient l'instruction de commande destinée à la source d'alimentation électrique (2) pour délivrer la tension de charge calculée ($V_{calc}$), et est situé dans une unité de commande (5),
**caractérisé en ce que**
la valeur qui représente la tension de batterie ($V_{bat}$) sur le moment pour l'au moins une batterie (3) est calculée en fonction de la tension de l'unité de commande (5).

**2.** Système de charge de batterie selon la revendication 1, dans lequel le régulateur (4) est un régulateur PID.

**3.** Système de charge de batterie selon l'une ou l'autre des revendications 1 et 2, dans lequel le régulateur (4) est commandé par un nombre de paramètres fixes prédéterminés concernant le bus.

**4.** Système de charge de batterie selon l'une quelconque des revendications 1 à 3, dans lequel la période d'échantillonnage pour le système de charge de batterie (1) est d'environ 2 Hz.

**5.** Système de charge de batterie selon l'une quelconque des revendications 1 à 4, dans lequel les unités connectées créant une résistance ($R_1$-$R_{11}$, $R_{L1}$-$R_{L3}$) se présentent sous la forme de résistances dans des conducteurs ($R_1$-$R_{11}$) et/ou de consommateurs de courant connectés ($R_{L1}$-$R_{L3}$).

**6.** Système de charge de batterie selon la revendication 5, dans lequel le nombre de consommateurs de courant connectés ($R_{L1}$-$R_{L3}$) varie dans le temps.

**7.** Système de charge de batterie selon l'une quelconque des revendications 1 à 6, dans lequel la source d'alimentation électrique (2) est située dans la partie arrière du bus et l'au moins une batterie (3) dans la partie avant du bus, ou vice versa.

**8.** Procédé de commande de la charge d'au moins une batterie dans un système de charge de batterie (1) d'un bus, lequel système comprend une source d'alimentation électrique (2) adaptée pour délivrer une tension de charge à au moins une batterie (3) avec une ou plusieurs unités créant une résistance ($R_1$-$R_{11}$, $R_{L1}$-$R_{L3}$) connectées au système, le procédé comprenant les étapes de :

- recevoir en continu une valeur qui représente une tension de charge ($V_d$) souhaitée sur le moment dans un régulateur (4) situé dans une unité de commande (5),
- recevoir en continu une valeur qui représente une tension de batterie ($V_{bat}$) sur le moment pour l'au moins une batterie (3) dans ledit régulateur (4),
- calculer en continu une valeur de charge ($V_{calc}$) délivrée par la source d'alimentation électrique (2) et requise pour obtenir ladite tension de charge souhaitée ($V_d$) en fonction d'une tension de charge ($V_d$) souhaitée sur le moment et d'une tension de batterie ($V_{bat}$) sur le moment pour au moins une batterie (3), et
- générer un signal de commande (S) qui contient l'instruction de commande destinées à la source d'alimentation électrique (2) pour délivrer la tension de charge calculée ($V_{calc}$), le procédé étant **caractérisé en ce que** la valeur qui représente la tension de batterie ($V_{bat}$) sur le moment pour le système à batterie est calculée en fonction de la tension de l'unité de commande (5).

**9.** Procédé selon la revendication 8, dans lequel le régulateur (4) est un régulateur PID.

**10.** Procédé selon la revendication 8, dans lequel le régulateur (4) est commandé par un nombre de paramètres fixes prédéterminés concernant le bus.

**11.** Procédé mis en oeuvre dans un système de charge de batterie selon l'une quelconque des revendications 8 à 10, dans lequel la période d'échantillonnage pour le système de charge de batterie (1) est d'environ 2 Hz.

**12.** Programme informatique comprenant des étapes de programme pour l'application du procédé selon l'une quelconque des revendications 8 à 11.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009051325 A
- JP 2307338 A
- WO 2005060066 A
- US 6404163 B
- US 5182510 A
- US 2008100269 A
- US 2010127668 A
- WO 9210019 A